# EUROPÄISCHE PATENTANMELDUNG

(11) **EP 4 491 868 A1**
(43) Veröffentlichungstag der Anmeldung: **15.01.2025**
(21) Anmeldenummer: 23184480.4
(22) Anmeldetag: 10.07.2023
(51) Int. Cl.: F03D 1/06

(54) **WINDENERGIEANLAGEN-ROTORBLATT UND VERFAHREN ZUM HERSTELLEN EINES WINDENERGIEANLAGEN-ROTORBLATTES**

(71) Anmelder: Wobben Properties GmbH, 26607 Aurich (DE)
(72) Erfinder: Stops, Florian, 39418 Staßfurt, Neundorf (DE); Stemberg, Jochen, 26607 Aurich (DE)
(74) Vertreter: Eisenführ Speiser

(57) **Zusammenfassung**

Es wird ein Windenergieanlagen-Rotorblatt (200) mit einer Saugseite (210) mit einer Saugseiten-Halbschale (211) und einer Druckseite (220) mit einer Druckseiten-Halbschale (221) vorgesehen. Die Saugseiten-Halbschale (211) weist ein Saugseiten-Vorderkantenende (212) und ein Saugseiten-Hinterkantenende (213) auf. Die Druckseiten-Halbschale (221) weist ein Druckseiten-Vorderkantenende (222) und ein Druckseiten-Hinterkantenende (223) auf. Ein Hinterkanten-Einsatz (250) ist zwischen dem Saugseiten-Hinterkantenende (213) und dem Druckseiten-Hinterkantenende (223) vorgesehen. Der Hinterkanten-Einsatz (250) weist mindestens ein Gurney Flap (259) auf.

## Beschreibung

Die vorliegende Erfindung betrifft ein Windenergieanlagen-Rotorblatt und ein Verfahren zum Herstellen eines Windenergieanlagen-Rotorblattes.

Aktuelle Windenergieanlagen sind typischerweise als sogenannte Horizontalachsen-Windenergieanlagen ausgestaltet, bei denen ein Rotor mit einer im Wesentlichen horizontalen Achse vorgesehen ist. An dem Rotor sind Rotorblätter vorgesehen, welche sich in einer Ebene im Wesentlichen senkrecht zum Wind drehen. Derartige Windenergieanlagen nutzen die kinetische Windenergie aus und wandeln diese in eine mechanische Rotationsenergie um. Die Rotorblätter bilden hierbei eine Saugseite und eine Druckseite aus, sodass bei Umströmung des Profils der Rotorblätter mit bewegter Luft auf der Saugseite gegenüber der Druckseite ein Unterdruck entsteht. Der daraus resultierende Druckunterschied zwischen der Druckseite und der Saugseite führt zu einem aerodynamischen Auftrieb.

Herkömmliche Rotorblätter sind dahingehend nachteilig, dass die anliegende Luftströmung insbesondere an der Saugseite abreißt und sich ein sogenanntes "Totwassergebiet" mit einer abgelösten Strömung bildet. Insbesondere bei größeren Anstellwinkeln kann die Strömung nicht mehr glatt an einem Profil eines Rotorblattes anliegen und reißt ab. Dies führt zu einer Verringerung des Auftriebs des Rotorblattes und bremst das Rotorblatt ab, da dessen Luftwiderstand erhöht wird. Dies kann zu einer Reduzierung des Wirkungsgrades des aerodynamischen Rotors und somit zu einer Reduzierung des Ertrags der Windenergieanlage führen.

Zur Verbesserung der aerodynamischen Eigenschaften der Rotorblätter und damit zur Steigerung der Effizienz können Rotorblätter mit einer flachen Hinterkante (Flatback-Profil) vorgesehen werden. Die flache Hinterkante kann beispielsweise durch Verwendung eines Schaumeinlegers hergestellt werden. Dies hat jedoch zur Folge, dass die Produktion konstruktiv sehr aufwendig und damit teuer ist.

EP 3 981 981 A1 zeigt ein Windenergieanlagen-Rotorblatt mit einer Saugseite, einer Druckseite, einer Vorderkante und einer Hinterkante. An der Druckseite kann ein Gurney Flap oder eine Spreizklappe ausgebildet sein, um die aerodynamischen Strömungseigenschaften zu beeinflussen.

Es ist daher eine Aufgabe der vorliegenden Erfindung, ein Windenergieanlagen-Rotorblatt und ein Verfahren zum Herstellen eines Windenergieanlagen-Rotorblattes vorzusehen, bei welchem ein oder mehrere der genannten Nachteile vermieden oder beseitigt werden. Es ist insbesondere eine Aufgabe der vorliegenden Erfindung, ein Windenergieanlagen-Rotorblatt vorzusehen, welches die Komplexität bei der Produktion der Rotorblätter reduziert. Es ist insbesondere eine Aufgabe der vorliegenden Erfindung, ein Windenergieanlagen-Rotorblatt vorzusehen, welches über eine verbesserte Aerodynamik verfügt.

Diese Aufgabe wird durch ein Windenergieanlagen-Rotorblatt nach Anspruch 1 sowie durch ein Verfahren zum Herstellen eines Windenergieanlagen-Rotorblattes gemäß Anspruch 8 gelöst.

Diese Aufgabe wird durch ein Windenergieanlagen-Rotorblatt gelöst, das aus zwei Halbschalen (Saugseitenschale und Druckseitenschale) aufgebaut ist. Die beiden Schalen werden dann aufeinander platziert und können z. B. mittels eines Klebewinkels an der Vorderkante zumindest teilweise zusammengefügt werden. An der Endkante kann ein Endkanten-Einsatz zwischen den hinterkantenseitigen Enden der saugseitigen Halbschale und der druckseitigen Halbschale vorgesehen werden. Der Hinterkanten-Einsatz kann dann zumindest teilweise eine flache Hinterkante bzw. ein Flatback-Profil ausbilden. An dem Hinterkanten-Einsatz ist mindestens ein Gurney Flap vorgesehen.

Ein Gurney Flap ist ein aerodynamisches Bauteil, dass eine aerodynamische Auftriebserhöhung bewirken kann. Der Gurney Flap kann an der Hinterkante des Rotorblattes vorgesehen sein.

Gemäß einem Aspekt der vorliegenden Erfindung kann der Hinterkanten-Einsatz zusammen mit dem Gurney Flap einteilig ausgestaltet sein.

Gemäß einem weiteren Aspekt kann der Hinterkanten-Einsatz auch ohne Gurney Flap hergestellt sein. In einem derartigen Fall kann die druckseitige Halbschale an dem Hinterkantenende einen Gurney Flap aufweisen. Hierbei kann die Druckseiten-Halbschale einstückig mit dem Gurney Flap hergestellt werden. Mit anderen Worten, der Gurney Flap ist Teil der Druckseiten-Halbschale.

Gemäß einem weiteren Aspekt kann der Hinterkanten-Einsatz als ein C-Steg ausgestaltet sein, wobei der C-Steg mindestens einen Gurney Flap oder eine Abrisskante aufweist.

Gemäß einem Aspekt der Erfindung ist der Hinterkanten-Einsatz so ausgestaltet, dass eine flache Hinterkante (Flatback) ausgebildet wird.

Gemäß einem weiteren Aspekt kann sich der Hinterkanten-Einsatz entlang einer Längsachse des Rotorblattes sich verändern. Beispielsweise kann sich die Länge oder Breite des Hinterkanten-Einsatzes rechtwinklig zur Längsachse in Richtung der Rotorblattspitze reduzieren. Gemäß einem weiteren Aspekt kann eine druckseitige Halbschale einen integrierten Gurney Flap bzw. eine integrierte Abrisskante aufweisen.

Gemäß einem weiteren Aspekt kann der Hinterkanten-Einsatz ein erstes und zweites Ende aufweisen, welche jeweils mit den Enden der saugseitigen Halbschale und der druckseitigen Halbschale verbunden werden. Hierzu können die ersten und zweiten Enden entsprechende Ausnehmungen aufweisen, um die hinterkantenseitigen Enden der saugseitigen Halbschale und der druckseitigen Halbschale derart aufzunehmen, dass im Wesentlichen eine aerodynamisch wirksame Kante am Übergang zwischen der saugseitigen Halbschale und der druckseitigen Halbschale mit dem Hinterkanten-Einsatz vermieden wird. Dies ist vorteilhaft, weil damit ein sauberer aerodynamischer Übergang erreicht werden kann.

Durch Verwendung des Hinterkanten-Einsatzes wird ein Abstand zwischen den hinterkantenseitigen Enden der saugseitigen Halbschale und der druckseitigen Halbschale erreicht, während die vorderkantenseitigen Enden der saugseitigen Halbschale und der druckseitigen Halbschale aufeinanderliegen und beispielsweise mittels eines Vorderkanten-Klebewinkels miteinander befestigt sind. Somit führt das Einsetzen des Hinterkanten-Einsatzes dazu, dass sich der Querschnitt des Rotorblattes verändern würde. Dies kann durch entsprechende Änderung der Konstruktion vermieden werden, wenn das Einfügen des Hinterkanten-Einsatzes mit berücksichtigt wird.

Die Integration des Gurney Flaps in den Hinterkanten-Einsatz bereits bei der Produktion des Hinterkanten-Einsatzes kann die Fertigung des Rotorblattes vereinfachen, da ein nachträgliches Anbringen des Gurney Flaps nicht mehr benötigt wird.

Die Erfindung geht unter anderem davon aus, dass ein Gurney Flap zusammen mit einer Halbschale und/oder einem Hinterkanten-Einsatz hergestellt wird, sodass ein nachträgliches Anbringen eines Gurney Flaps nicht mehr notwendig ist.

Gemäß einem Aspekt kann der Gurney Flap insbesondere im Bereich der Rotorblattwurzel auf der Druckseite sowie im Bereich der Hinterkante oder an der Hinterkante vorgesehen sein. Insbesondere können die Gurney Flaps an Stellen kurz vor der Strömungsablösung vorgesehen sein.

Durch die Verwendung eines Gurney Flaps kann eine Wölbung eines Profils eines Rotorblattes deutlich erhöht werden, was zu einer signifikanten Auftriebssteigerung führen kann. Die Verwendung eines Gurney Flaps führt auch zu einer Erhöhung des aerodynamischen Momentes und vor allen Dingen zu einer Erhöhung des Widerstandsbeiwertes. Die Gurney Flaps können somit dort eingesetzt werden, wo ein hoher Auftrieb nötig ist, ein geringer Widerstandsbeiwert nicht erforderlich ist. Somit können die Gurney Flaps vorzugsweise im Bereich der Rotorblattwurzel verwendet werden.

Durch die Integration eines Gurney Flaps bzw. einer Abrisskante an einer druckseitigen Schale des Rotorblattes oder an einem Hinterkanten-Einsatz kann die Fertigung, Herstellung und Umsetzung von Windenergieanlagen-Rotorblättern erheblich verbessert und vereinfacht werden. Anstatt einen Gurney Flap nachträglich an der der druckseitigen Halbschale oder an einer Hinterkante des Rotorblattes zu befestigen, wird ein Gurney Flap unmittelbar bei der Herstellung der Halbschale oder bei der Herstellung eines Hinterkanten-Einsatzes integriert.

Demnach können die jeweiligen Bauteile, die für das Herstellen eines Rotorblattes benötigt werden, zusammen mit einem Gurney Flap hergestellt werden. Mit anderen Worten, ein Gurney Flap kann in ein anderes Bauteil eines Rotorblattes integriert werden.

Gemäß einem Aspekt kann ein Gurney Flap in einen Hinterkanten-Einsatz integriert werden. Dies kann erreicht werden, indem eine Trennebene des Rotorblattes (typischerweise mittige Trennung zwischen der saugseitigen Halbschale und der druckseitigen Halbschale) im Bereich der Endkante in Richtung der Saugseite bzw. der Druckseite derart versetzt werden, dass ein Abstand zwischen den eigentlichen Trennebenen vorhanden ist, wobei der Hinterkanten-Einsatz dann hier platziert werden kann. Dieser Abstand zwischen den hinterkantenseitigen Enden der Saugseite und der Druckseite erfolgt dann über den Hinterkanten-Einsatz. Damit ist eine ausreichende mechanische Stabilität des Rotorblattes gewährleistet.

Durch eine Integration eines Gurney Flaps in einen Hinterkanten-Einsatz kann durch Einfügen des Hinterkanten-Einsatzes an den freien Enden der saugseitigen Halbschale und der druckseitigen Halbschale sowohl der Hinterkanten-Einsatz als auch der Gurney Flap in einem Prozessschritt montiert werden. Die genaue Position und Ausrichtung der Rotorblattaußenhülle mit dem Gurney Flap ist durch die Herstellung der druckseitigen Halbschale mit dem integrierten Gurney Flap oder mit dem Hinterkanten-Einsatz sowie dem integrierten Gurney Flap realisierbar.

Wenn der Hinterkanten-Einsatz an der saugseitigen Halbschale und an der druckseitigen Halbschale befestigt ist, dann ist der Gurney Flap bereits richtig ausgerichtet.

Die Verwendung eines Hinterkanten-Einsatzes zur Realisierung eines Rotorblattes mit einer flachen Hinterkante (Flatback) erlaubt eine erhebliche Vereinfachung der Herstellung eines derartigen Rotorblattes, weil damit keine komplexen Schaumeinleger mehr benötigt werden. Des Weiteren wird eine strukturell sichere Verklebung hochbelasteter Blattsektionen ermöglicht.

Durch eine optimierte Herstellung eines Gurney Flaps (nämlich eine Integration eines Gurney Flaps in ein für die Herstellung des Rotorblattes benötigtes Bauteil wie beispielsweise ein Hinterkanten-Einsatz oder eine druckseitige Halbschale) wird die Herstellung des Rotorblattes verbessert, da lediglich ein integrales Bauteil benötigt wird, um sowohl die Hinterkante als auch einen Gurney Flap zu verwirklichen.

Dies kann ferner zu einer Kostenersparnis führen. Eine flache Hinterkantengeometrie kann insbesondere im Bereich der Rotorblattwurzel zu einer strukturellen Optimierung der Rotorblätter führen.

Neben der Verbesserung der Integration eines Gurney Flaps in die Struktur des Rotorblattes kann auch eine saugseitige Profilgeometrie durch den Hinterkanten-Einsatz verbessert werden. Dies kann beispielsweise durch eine Saugseitenverlängerung oder eine wellenförmige Hinterkante erreicht werden.

Die Gurney Flaps können gerade oder gebogen oder gekrümmt ausgestaltet sein.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine schematische Schnittansicht eines Rotorblattes einer Windenergieanlage,
- Fig. 3: zeigt eine weitere schematische Schnittansicht eines Rotorblattes,
- Fig. 4: zeigt einen weiteren schematischen Querschnitt eines Rotorblattes,
- Fig. 5: zeigt einen schematischen Querschnitt eines Rotorblattes gemäß einem Aspekt der Erfindung,
- Fig. 6A bis 6C: zeigen jeweils einen schematischen Querschnitt an drei unterschiedlichen Stellen entlang eines Rotorblattes gemäß einem Aspekt der Erfindung,
- Fig. 7: zeigt einen schematischen Querschnitt eines Rotorblattes gemäß einem Aspekt der Erfindung,
- Fig. 8A bis 8C: zeigen jeweils einen schematischen Querschnitt an drei Stellen entlang einer Länge eines Rotorblattes, und
- Fig. 9: zeigt eine schematische Darstellung einer Herstellungsform für eine Schale eines Rotorblattes, und
- Fig. 10A bis 10C: zeigen verschiedene schematische Querschnitte eines Windenergieanlagen-Rotorblattes.

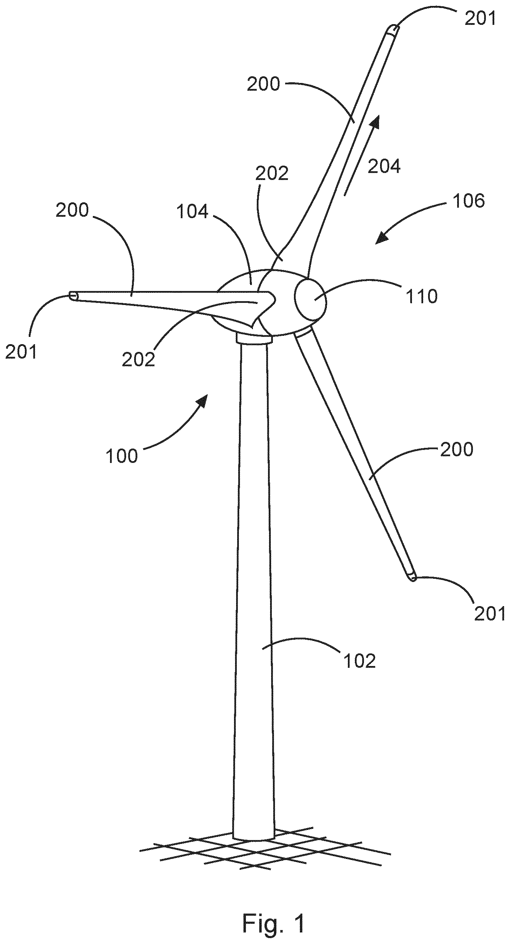

Fig. 1 zeigt eine schematische Darstellung einer Windenergieanlage. Die Windenergieanlage 100 weist einen Turm 102, eine Gondel 104 sowie einen aerodynamischen Rotor 106 auf. Der aerodynamische Rotor 106 weist einen Spinner 110 sowie vorzugsweise drei Rotorblätter 200 auf. Der aerodynamische Rotor 106 wird durch Wind in eine Rotation versetzt. Der aerodynamische Rotor 106 kann direkt oder indirekt mit einem elektrischen Generator gekoppelt sein, um Energie zu erzeugen.

Die Rotorblätter 200 weisen jeweils eine Rotorblattwurzel 202, eine Rotorblattspitze 203 sowie eine Längsrichtung 204 auf. Die Rotorblätter 200 sind im Bereich der Rotorblattwurzel 202 an dem aerodynamischen Rotor 106 beispielsweise an einem Rotorblattanschluss verbunden.

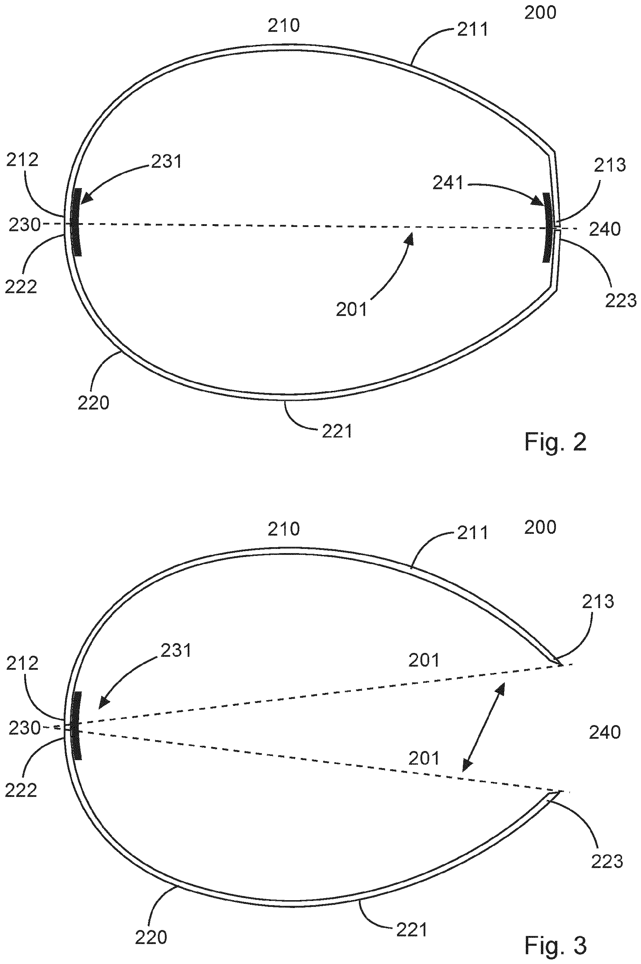

Fig. 2 zeigt eine schematische Schnittansicht eines Rotorblattes einer Windenergieanlage. Das Rotorblatt 200 kann beispielsweise aus zwei Schalen 210, 220 hergestellt werden. Die Schalen oder Halbschalen 210, 220 können jeweils vorgefertigt und dann zusammengesetzt werden. Insbesondere weist ein Rotorblatt 200 eine Saugseite 210 mit einer Saugseiten-Halbschale 211 und eine Druckseite 220 mit einer Druckseiten-Halbschale 221 auf. Die Saugseiten-Halbschale 211 weist ein Saugseiten-Vorderkantenende 212 und ein Saugseiten-Hinterkantenende 213 auf. Die Druckseiten-Halbschale 221 weist ein Druckseiten-Vorderkantenende 222 und ein Druckseiten-Hinterkantenende 223 auf.

Das Rotorblatt 200 weist eine Rotorblattwurzel 202, eine Rotorblattspitze 203, eine Vorderkante 230 und eine Hinterkante 240 auf. An der Vorderkante 230 werden das Saugseiten-Vorderkantenende 212 und das Druckseiten-Vorderkantenende 222 z. B. mittels eines Vorderkanten-Klebewinkels 231 aneinander oder miteinander befestigt. Der Klebewinkel 231 ist dabei vorzugsweise an der Innenseite der Rotorblattschalen 210, 220 vorgesehen. An der Rotorblatthinterkante 240 können das Saugseiten-Hinterkantenende 213 und das Druckseiten-Hinterkantenende 223 z. B. mittels eines Hinterkanten-Klebewinkels 241 aneinander befestigt werden.

Zwischen der Saugseiten-Halbschale 211 und der Druckseiten-Halbschale 221 ist eine Trennebene 201 vorgesehen. Die Trennebene 201 zeigt an, wo die Saugseiten-Halbschale 211 und die Druckseiten-Halbschale 221 endet.

Vorzugsweise werden die beiden Halbschalen 211, 221 separat hergestellt und dann wie in Fig. 2 gezeigt mittels Klebewinkel aneinander oder miteinander befestigt.

Fig. 3 zeigt eine weitere schematische Schnittansicht eines Rotorblattes. Das Rotorblatt 200 gemäß Fig. 3 entspricht dem Rotorblatt 200 gemäß Fig. 2. Das Rotorblatt 200 weist somit eine Saugseite 210 mit einer Saugseiten-Halbschale 211 sowie eine Druckseite 220 mit einer Druckseiten-Halbschale 221 auf. Während die beiden Vorderkantenenden 212, 222 mittels des Vorderkantenklebewinkels 231 aneinander oder miteinander befestigt sind, sind die Hinterkantenenden 213, 223 voneinander getrennt. Insbesondere ist ein Abstand zwischen diesen Enden vorgesehen.

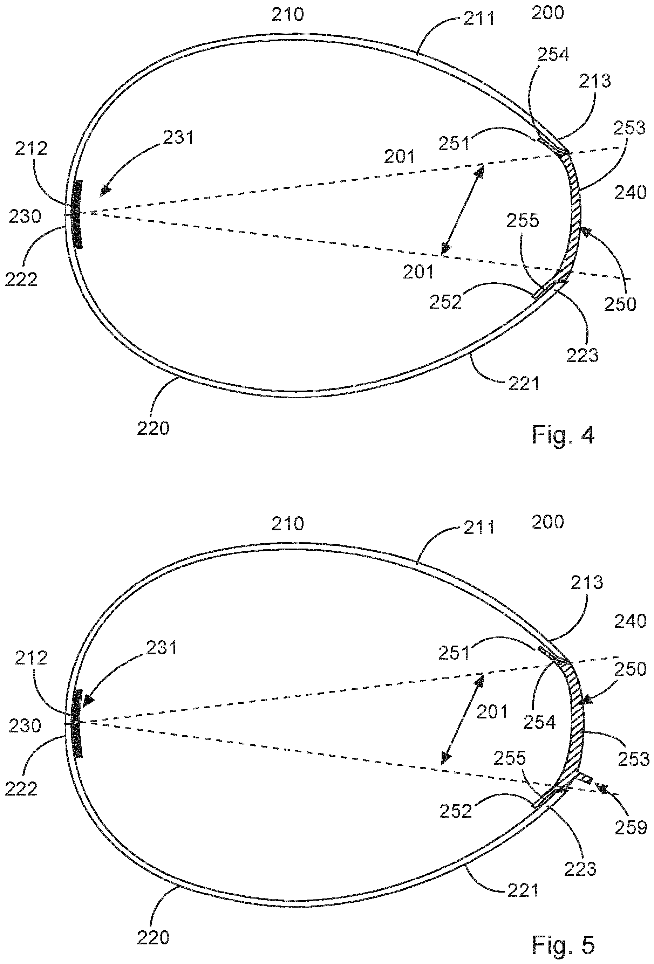

Fig. 4 zeigt einen weiteren schematischen Querschnitt eines Rotorblattes. Der Querschnitt von Fig. 4 entspricht dem Querschnitt von Fig. 3, wobei ein Hinterkanten-Einsatz 250 zwischen den Hinterkantenenden 213, 223 vorgesehen ist. Somit sind die Hinterkantenenden 213 und 223 über den Hinterkanten-Einsatz 250 miteinander gekoppelt.

Der Hinterkanten-Einsatz 250 weist ein erstes und zweites Ende 251, 252 und einen mittleren Abschnitt 253 dazwischen auf. An dem ersten Ende 251 kann eine erste Ausnehmung 254 und an dem zweiten Ende 252 kann eine zweite Ausnehmung 255 vorgesehen sein. Die ersten und zweiten Ausnehmungen 254, 255 sind so ausgestaltet, dass sie die jeweiligen Hinterkantenenden 213, 223 aufnehmen können. Dies erfolgt insbesondere derart, dass nach außen hin keine oder nur eine sehr geringe Kante bzw. ein sehr geringer Übergang zwischen den Hinterkantenenden 213, 223 und dem Hinterkanten-Einsatz 250 vorhanden ist.

Mittels des Hinterkanten-Einsatzes wird ein Rotorblatt mit einer flachen Hinterkante (Flatback, Rotorblatt mit Flatback-Profil) ausgebildet.

Fig. 5 zeigt einen schematischen Querschnitt eines Rotorblattes gemäß einem Aspekt der Erfindung. Der Querschnitt von Fig. 5 entspricht im Wesentlichen dem Querschnitt von Fig. 3 und Fig. 4. In Fig. 5 ist jedoch ein Hinterkanten-Einsatz 250 (wie ebenfalls in Fig. 4 dargestellt) vorhanden, der jedoch zusätzlich einen Hinterkanten Gurney Flap 259 aufweist.

Damit ist ein Rotorblatt 200 mit einer Saugseite 210 mit einer Saugseiten-Halbschale 211 und eine Druckseite 220 mit einer Druckseiten-Halbschale 221 vorgesehen. Die Saugseiten-Halbschale 211 weist ein Saugseiten-Vorderkantenende 212 und ein Saugseiten-Hinterkantenende 213 auf. Die Druckseiten-Halbschale 221 weist ein Druckseiten-Vorderkantenende 222 und ein Druckseiten-Hinterkantenende 223 auf.

Optional können die Vorderkantenenden 212, 222 mittels eines Vorderkantenklebewinkels 231 miteinander oder aneinander befestigt sein. Die Hinterkantenenden 213, 223 sind jeweils mit einem ersten und zweiten Ende 251, 252 eines Hinterkanten-Einsatzes 250 verbunden. Der Hinterkanten-Einsatz 250 kann eine erste Ausnehmung 254 an dem ersten Ende 251 und eine zweite Ausnehmung 225 an dem zweiten Ende 252 aufweisen. Ferner kann ein Gurney Flap 259 im mittleren Bereich 253 vorgesehen sein.

Vorzugsweise ist der Gurney Flap 259 und der Hinterkanten-Einsatz 250 einstückig oder in einem Prozessschritt hergestellt.

Der Gurney Flap 259 kann an dem zweiten Ende 252 also im Bereich der Druckseite 220 ausgestaltet sein.

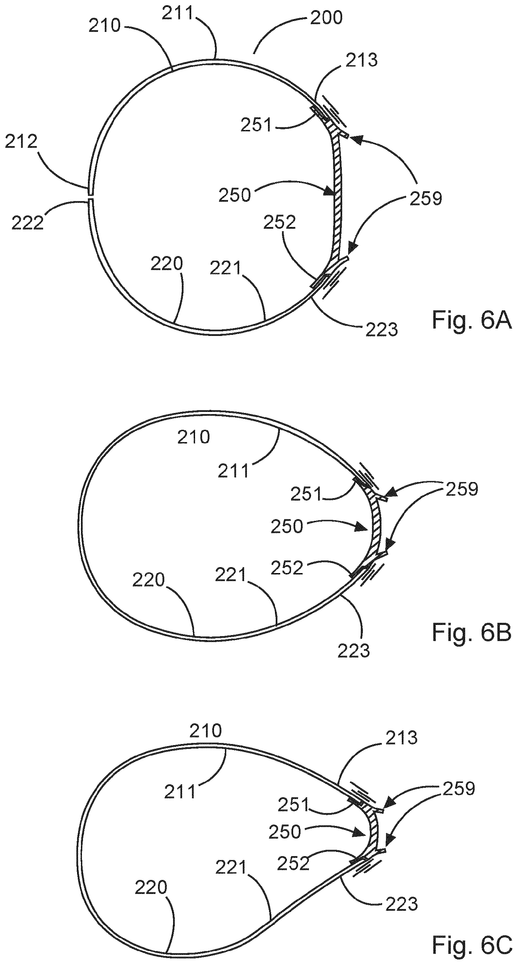

Fig. 6A bis 6C zeigen jeweils einen schematischen Querschnitt an drei unterschiedlichen Stellen entlang eines Rotorblattes gemäß einem Aspekt der Erfindung. In Fig. 6A bis 6C ist jeweils ein schematischer Querschnitt eines Rotorblattes 200 an drei unterschiedlichen Stellen entlang einer Längsrichtung 204 des Rotorblattes 200 dargestellt. Das Rotorblatt 200 weist eine Saugseite 210 mit einer Saugseiten-Halbschale 211 und eine Druckseite 220 mit einer Druckseiten-Halbschale 221 auf. Die Saugseiten-Halbschale 211 weist ein erstes und zweites Ende 212, 213 auf. Die Druckseiten-Halbschale 221 weist ein erstes und zweites Ende 222, 223 auf. Zwischen dem Saugseiten-Hinterkantenende 213 und dem Druckseiten-Hinterkantenende 223 ist ein Hinterkanten-Einsatz 250 mit einem ersten und zweiten Ende 251, 252 vorgesehen. Des Weiteren sind zwei Abrisskanten oder Gurney Flaps 259 an dem Hinterkanten-Einsatz 250 vorgesehen, d. h. es kann ein Gurney Flap am ersten Ende und ein Gurney Flap am zweiten Ende des Hinterkanten-Einsatzes 250 vorgesehen sein. Vorzugsweise sind die Abrisskanten bzw. Gurney Flaps 259 einstückig mit dem Hinterkanten-Einsatz 250 hergestellt.

Vorzugsweise kann der Hinterkanten-Einsatz 250 als C-Steg mit mindestens einer Abrisskante ausgestaltet sein.

Wie aus den Fig. 6A, 6B und 6C zu sehen ist, ändert sich die Form des Hinterkanten-Einsatzes 250 entlang einer Längsrichtung 203 des Rotorblattes. Damit passt sich der Hinterkanten-Einsatz 250 an eine veränderte Form des Rotorblattes entlang der Längsrichtung 203 des Rotorblattes 200 an. In Fig. 6A ist beispielsweise ein Querschnitt im Bereich der Rotorblattwurzel und in Fig. 6C ist beispielsweise ein Querschnitt im Bereich der Rotorblattspitze dargestellt.

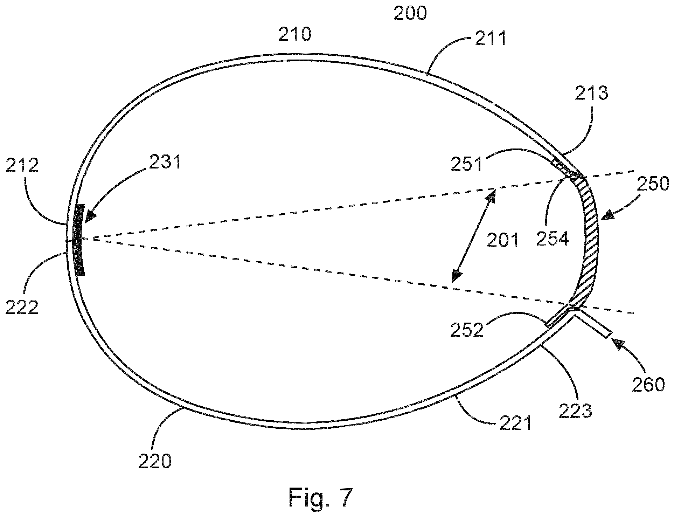

Fig. 7 zeigt einen schematischen Querschnitt eines Rotorblattes gemäß einem Aspekt der Erfindung. Das Rotorblatt 200 weist eine Saugseite 210 mit einer Saugseiten-Halbschale 211 und eine Druckseite 220 mit einer Druckseiten-Halbschale 221 auf. Die Saugseiten-Halbschale 211 weist ein erstes und zweites Ende, nämlich ein Saugseiten-Vorderkantenende 212 und ein Saugseiten-Hinterkantenende 213 auf. Die Druckseiten-Halbschale 221 weist ein erstes und zweites Ende, nämlich ein Druckseiten-Vorderkantenende 222 und ein Druckseiten-Hinterkantenende 223 auf. Zwischen den Hinterkantenenden 213, 223 ist ein Hinterkanten-Einsatz 250 vorgesehen, welcher dazu dienen kann, ein Rotorblatt 200 mit einem Flatback-Profil auszugestalten.

An dem Druckseiten-Hinterkantenende 223 ist ein Gurney Flap 260 vorgesehen. Vorzugsweise wird die Druckseiten-Halbschale 221 und der Gurney Flap 260 einstückig hergestellt.

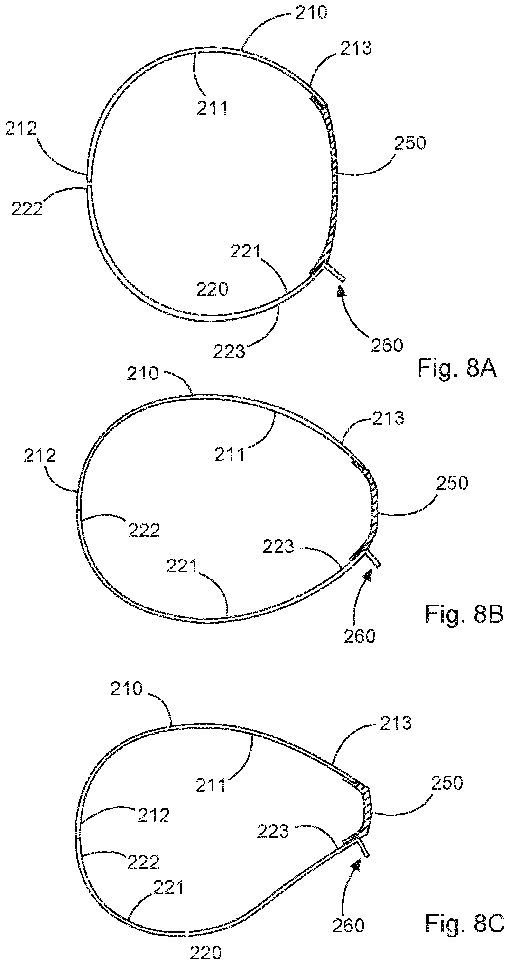

Fig. 8A bis 8C zeigen jeweils einen schematischen Querschnitt an drei Stellen entlang einer Länge eines Rotorblattes. In Fig. 8A ist eine schematische Schnittansicht des Rotorblattes im Bereich der Rotorblattwurzel und in Fig. 8C ist eine schematische Schnittansicht des Rotorblattes 200 im Bereich der Rotorblattspitze 210 dargestellt. Die Saugseiten-Halbschale 211 und die Druckseiten-Halbschale 221 ist wie in Fig. 7 dargestellt ausgestaltet. Entsprechendes gilt für den Hinterkanten-Einsatz 250.

Somit wird ein Rotorblatt vorgesehen, welches eine Druckseiten-Halbschale 221 mit einer einstückigen Abrisskante 260 aufweist, wobei die Abrisskante 260 an einem Druckseiten-Hinterkantenende 223 vorgesehen ist.

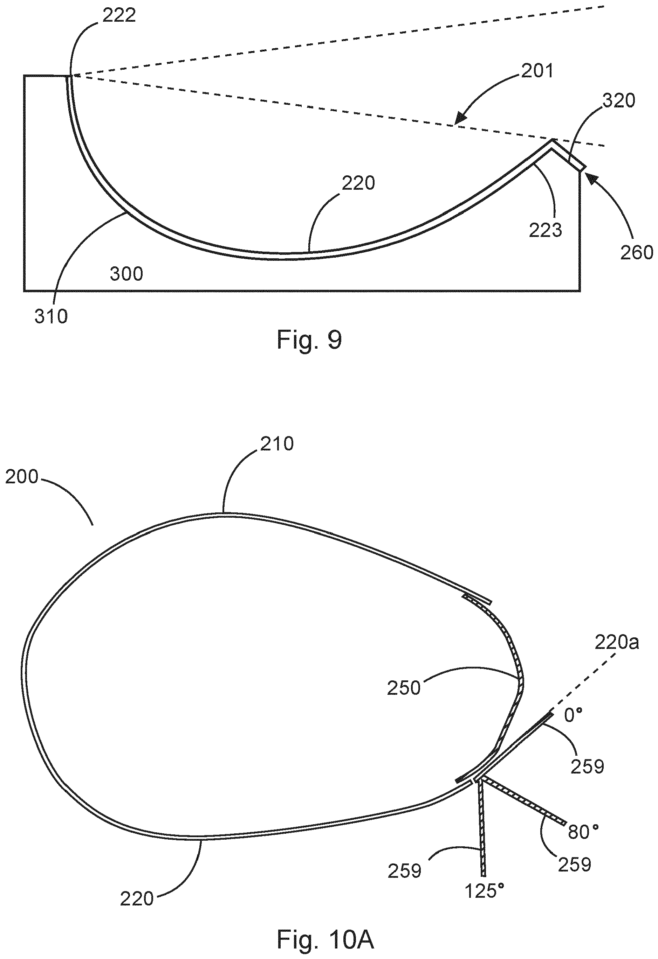

Fig. 9 zeigt eine schematische Darstellung einer Herstellungsform für eine Schale eines Rotorblattes. In Fig. 9 ist eine Herstellungsform 300 für eine Druckseiten-Halbschale 221 dargestellt. Die Herstellungsform 300 weist eine Ausnehmung 310 für die Druckseiten-Halbschale 221 sowie eine Ausnehmung 320 für den Gurney Flap 260 auf. Mittels dieser Herstellungsform 300 kann die Druckseiten-Halbschale 221 sowie der Gurney Flap 260 zusammen in einem Herstellschritt einstückig hergestellt werden.

Fig. 10A bis 10C zeigen verschiedene schematische Querschnitte eines Windenergieanlagen-Rotorblattes. Das Rotorblatt 200 weist eine Saugseite 210 und eine Druckseite 220 sowie einen Hinterkanten-Einsatz 250 auf. An dem Hinterkanten-Einsatz 250 kann ein Gurney Flap 259 vorgesehen sein. An der Stelle, an welcher der Gurney Flap 259 an dem Hinterkanten-Einsatz vorhanden ist, liegt eine Tangente 220a an, welche gemäß der Erfindung einen Winkel von 0° aufweist. Der Gurney Flap 259 weist einen Winkel bezogen auf die Tangente von zwischen 0 und 125° auf. Mit anderen Worten, ein Einbauwinkel des Gurney Flaps 259 kann auch Winkel > 90° aufweisen.

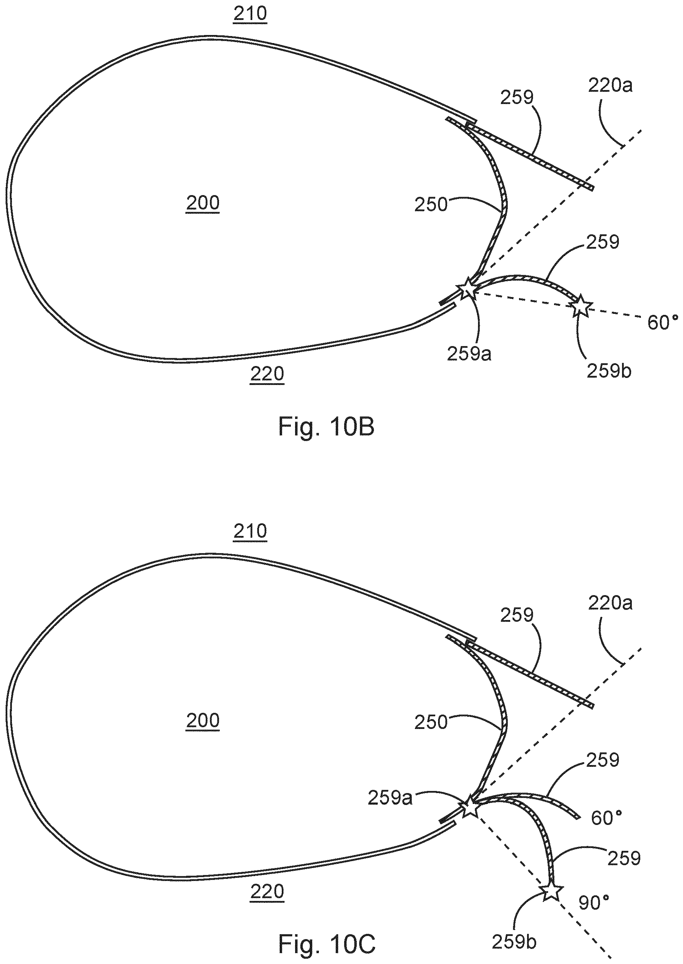

In Fig. 10B ist ein Gurney Flap, welcher einer Krümmung aufweist, und eine Oberflächenverlängerung gezeigt, welche gerade ausgestaltet ist. Der Gurney Flap 259 mit der Krümmung kann ein erstes Ende 259a und ein zweites Ende 259b aufweisen. Der Winkel des Gurney Flaps 259 kann dann durch eine Gerade bestimmt werden, welche durch das erste und zweite Ende 259a, 259b verläuft. Die Oberflächentangente 220a an der Stelle, an der der Gurney Flap an dem Hinterkanten-Einsatz befestigt ist, kann hierbei 0° darstellen. Somit kann - wie in Fig. 10B gezeigt - ein Winkel des Gurney Flaps 60° betragen.

Wenn der Gurney Flap an einem druckseitigen Ende des Hinterkanten-Einsatzes vorgesehen ist, dann kann der Gurney Flap bezogen auf eine Oberflächentangente einen Winkel zwischen 0° und 125° aufweisen. Bei einem Winkel von 0° liegt der Gurney Flap dann auf der Oberflächentangente. Damit wird eine Druckseitenverlängerung mit einem Winkel zwischen 0 und 125° erreicht.

Optional ist die Druckseitenerweiterung an die Profiloberfläche angepasst. Der Gurney Flap kann eine gebogene Kontur aufweisen. Eine Gerade zwischen einem ersten und zweiten Ende des gebogenen Gurney Flaps dient dazu, einen Winkel des Gurney Flaps bezogen auf die Tangente 220a zu definieren.

In Fig. 10C ist eine weitere Ausgestaltung des Hinterkanten-Einsatzes mit dem Gurney Flap gezeigt. Hierbei kann der Gurney Flap gebogen ausgestaltet sein und einen Winkel von 90° aufweisen. Der Winkel wird durch eine Gerade bestimmt, welche sowohl durch das erste als auch durch das zweite Ende des Gurney Flaps verläuft. Eine Druckseitenerweiterung kann hierbei einen Einbauwinkel von 60° und ein Gurney Flap kann einen Winkel von 90° aufweisen.

Eine Druckseitenverlängerung ergibt sich, wenn die originale Profilkontur nachgebildet wird. Kommt es jedoch zu einer zusätzlichen Wölbung, dann stellt dies einen Gurney Flap dar.

### Bezuqszeichenliste

- 100: Windenergieanlage
- 102: Turm
- 104: Gondel
- 106: Rotor
- 110: Spinner
- 200: Rotorblatt
- 201: Rotorblatt-Trennungsebene
- 202: Rotorblattwurzel
- 203: Rotorblattspitze
- 204: Längsrichtung
- 210: Saugseite
- 211: Saugseiten-Halbschale
- 212: Saugseiten-Vorderkantenende
- 213: Saugseiten-Hinterkantenende
- 215: Hinterkanten-Einsatz
- 220: Druckseite
- 220a: Tangente
- 221: Druckseiten-Halbschale
- 222: Druckseiten-Vorderkantenende
- 223: Druckseiten-Hinterkantenende
- 225: Ausnehmung
- 230: Vorderkante
- 231: Vorderkanten-Klebewinkel
- 240: Hinterkante
- 241: Hinterkanten-Klebewinkel
- 250: Hinterkanten-Einsatz
- 251: erstes Ende
- 252: zweites Ende
- 253: mittlerer Abschnitt
- 254: erste Ausnehmung
- 255: zweite Ausnehmung
- 259: Hinterkanten-Gurney Flap
- 259a: erstes Ende
- 259b: zweites Ende
- 260: Gurney Flap
- 300: Herstellungsform
- 310: Halbschalen-Ausnehmung
- 320: Gurney Flap-Ausnehmung

## Patentansprüche

1. Windenergieanlagen-Rotorblatt (200), mit
einer Saugseite (210) mit einer Saugseiten-Halbschale (211),
einer Druckseite (220) mit einer Druckseiten-Halbschale (221),
wobei die Saugseiten-Halbschale (211) ein Saugseiten-Vorderkantenende (212) und ein Saugseiten-Hinterkantenende (213) aufweist,
wobei die Druckseiten-Halbschale (221) ein Druckseiten-Vorderkantenende (222) und ein Druckseiten-Hinterkantenende (223) aufweist, und
einem Hinterkanten-Einsatz (250), welcher zwischen dem Saugseiten-Hinterkantenende (213) und dem Druckseiten-Hinterkantenende (223) vorgesehen ist,
wobei der Hinterkanten-Einsatz (250) mindestens ein Gurney Flap (259) aufweist.

2. Windenergieanlagen-Rotorblatt (200) nach Anspruch 1, wobei
der Hinterkanten-Einsatz (250) zusammen mit dem Gurney Flap (259) einteilig hergestellt ist.

3. Windenergieanlagen-Rotorblatt (200) nach Anspruch 1 oder 2, wobei
der Hinterkanten-Einsatz (250) ein erstes Ende (251) mit einer ersten Ausnehmung (254) und ein zweites Ende (252) mit einer zweiten Ausnehmung (255) aufweist, wobei
die erste Ausnehmung (254) dazu ausgestaltet ist, zumindest teilweise ein Saugseiten-Hinterkantenende (213) aufzunehmen,
wobei die zweite Ausnehmung (255) dazu ausgestaltet ist, ein Druckseiten-Hinterkantenende (223) zumindest teilweise aufzunehmen.

4. Windenergieanlagen-Rotorblatt (200) nach einem der Ansprüche 1 bis 3, wobei
der Hinterkanten-Einsatz (250) seine Form entlang einer Längsrichtung (204) des Rotorblattes ändert.

5. Windenergieanlagen-Rotorblatt (200) nach einem der Ansprüche 1 bis 4, wobei
der Hinterkanten-Einsatz (250) als ein C-Steg ausgestaltet ist.

6. Windenergieanlagen-Rotorblatt (200) nach einem der Ansprüche 1 bis 5, wobei
der Hinterkanten-Einsatz (250) einen ersten und zweiten Gurney Flap (259) aufweist, welcher jeweils im Bereich des ersten und zweiten Endes (251, 252) vorgesehen ist.

7. Windenergieanlagen-Rotorblatt (200) nach einem der Ansprüche 1 bis 6, wobei
der Gurney Flap ein erstes und zweites Ende (259a, 259b) aufweist, wobei der Gurney Flap (259) über sein erstes Ende (259a) mit dem Hinterkanten-Einsatz verbunden ist und einen Winkel zu einer Tangente (220a) an einem Übergang zwischen dem Hinterkanten-Einsatz und dem Gurney Flap (259) aufweist.

8. Windenergieanlagen-Rotorblatt (200) nach einem der Ansprüche 1 bis 7, wobei
der Gurney Flap gerade oder gebogen ausgestaltet ist.

9. Windenergieanlagen-Rotorblatt (200) nach Anspruch 8, wobei
ein Winkel der Gruney Flap und/oder die Krümmung des Gurney Flaps sich über eine Spannweite des Rotorblattes ändert.

10. Windenergieanlagen-Rotorblatt (200) nach einem der Ansprüche 1 bis 9, ferner mit
einer Druckseitenverlängerung oder einer Saugseitenverlängerung.

11. Windenergieanlage mit mindestens einem Rotorblatt nach einem der Ansprüche 1 bis 10.

12. Verfahren zum Herstellen eines Windenergieanlagen-Rotorblattes (200) mit den Schritten
- Herstellen einer Saugseiten-Halbschale (211) mit einem Saugseiten-Vorderkantenende (212) und einem Saugseiten-Hinterkantenende (213),
- Herstellen einer Druckseiten-Halbschale (221) mit einem Druckseiten-Vorderkantenende (222) und einem Druckseiten-Hinterkantenende (223),
- Herstellen eines Hinterkanten-Einsatzes mit dem Gurney Flap (259),
- Verbinden der Saugseiten-Vorderkantenenden (212) und der Druckseiten-Vorderkantenenden (222),
- Einfügen des Hinterkanten-Einsatzes (250) an dem Saugseiten-Hinterkantenende (213) und dem Druckseiten-Hinterkantenende (223).
